# EUROPÄISCHE PATENTSCHRIFT

(11) **EP 2 277 259 B1**
(45) Veröffentlichungstag und Bekanntmachung des Hinweises auf die Patenterteilung: **03.10.2018**
(21) Anmeldenummer: 09745624.8
(22) Anmeldetag: 27.03.2009
(51) Int. Cl.: H02P 3/22

(54) **DIESELELEKTRISCHES ANTRIEBSSYSTEM**
DIESEL-ELECTRIC DRIVE SYSTEM
SYSTÈME D'ENTRAÎNEMENT DIESEL-ÉLECTRIQUE

(30) Priorität: 13.05.2008 DE 102008023332
(43) Veröffentlichungstag der Anmeldung: 26.01.2011
(73) Patentinhaber: Siemens Aktiengesellschaft, 80333 München (DE)
(72) Erfinder: HOLWECK, Andreas, 91052 Erlangen (DE); KÖRNER, Olaf, 90469 Nürnberg (DE)
(86) Internationale Anmeldenummer: PCT/EP2009/053657
(87) Internationale Veröffentlichungsnummer: WO 2009/138291

(56) Entgegenhaltungen:
- DE-A1-102006 010 536
- DE-A1-102006 051 337
- DE-A1-102007 003 172

## Beschreibung

Die Erfindung bezieht sich auf ein dieselelektrisches Antriebssystem gemäß Oberbegriff des Anspruchs 1 und auf ein Verfahren zum stationären Belastungstest eines Dieselmotors des dieselelektrischen Antriebssystems.

Ein gattungsgemäßes dieselelektrisches Antriebssystem ist aus der DE 10 2007 003 172 A1 bekannt und als Ersatzschaltbild in der Figur 1 näher dargestellt. In diesem Ersatzschaltbild sind mit 2 ein Dieselmotor, mit 4 ein Generator, insbesondere ein permanenterregter Synchrongenerator, mit 6 ein Spannungszwischenkreis-Umrichter und mit 8 jeweils eine Drehfeldmaschine, insbesondere Drehstrom-Asynchronmotor, dargestellt. Der Spannungszwischenkreis-Umrichter 6 weist generatorseitig zwei selbstgeführte Pulsstromrichter 10 und 12 und lastseitig zwei selbstgeführte Pulsstromrichter 14 und 16 auf. Diese selbstgeführten Pulsstromrichter 10, 12 und 14, 16 sind mittels eines Zwischenkreis-Kondensators 18, insbesondere eine Zwischenkreis-Kondensatorbatterie, aufweisenden Spannungszwischenkreises 20 gleichspannungsseitig miteinander elektrisch leitend verbunden. Der Generator 4 weist mehrphasige Wicklungssysteme 22 und 24 auf, die jeweils mit wechselspannungsseitigen Anschlüssen R1, S1, T1 und R2, S2, T2 der beiden generatorseitigen selbstgeführten Pulsstromrichter 10 und 12 mittels eines Leistungsschalters 26 und 28 verknüpft sind. Die korrespondierenden wechselspannungsseitigen Anschlüsse R1 und R2 bzw. S1 und S2 bzw. T1 und T2 sind jeweils mittels eines Bremswiderstands 30 miteinander elektrisch leitend verbunden. Die Funktionsweise dieses dieselelektrischen Antriebssystems, insbesondere der Bremsbetrieb, ist in der DE 10 2007 003 172 A1 ausführlich beschrieben, so dass an dieser Stelle darauf verzichtet wird.

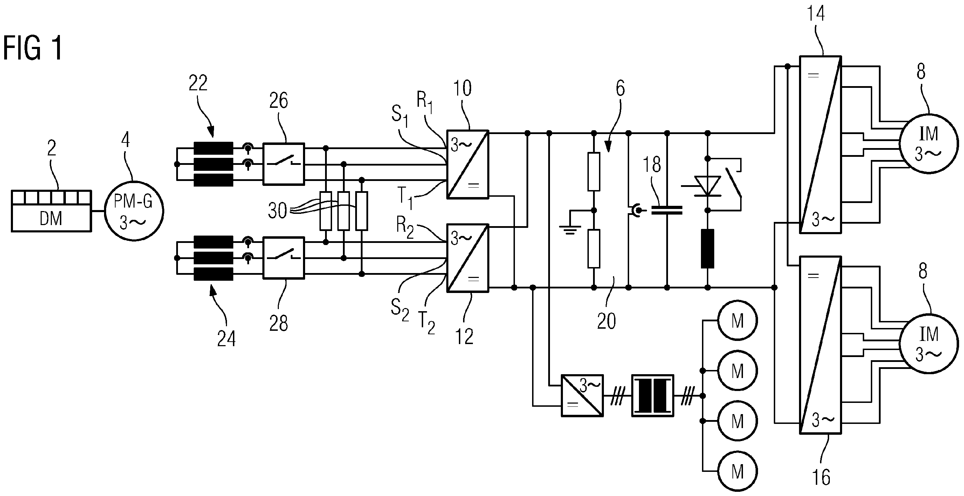

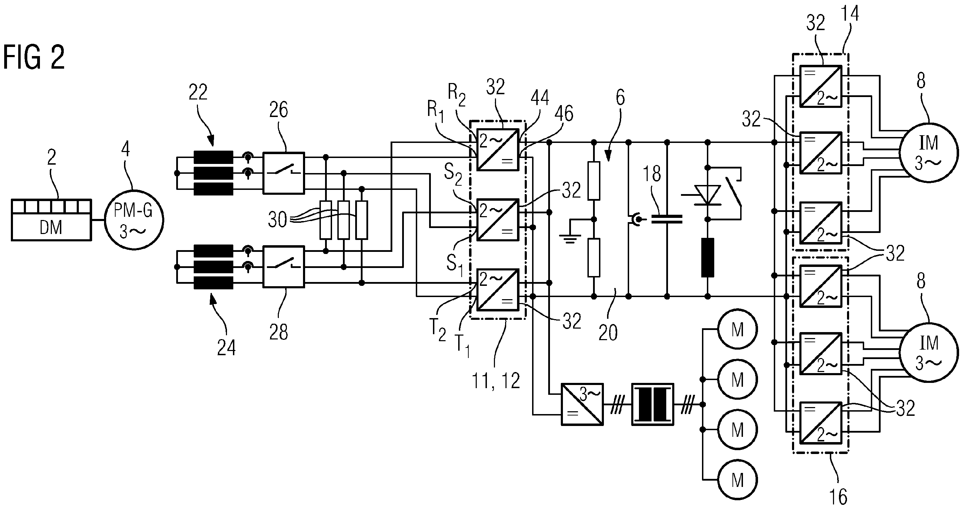

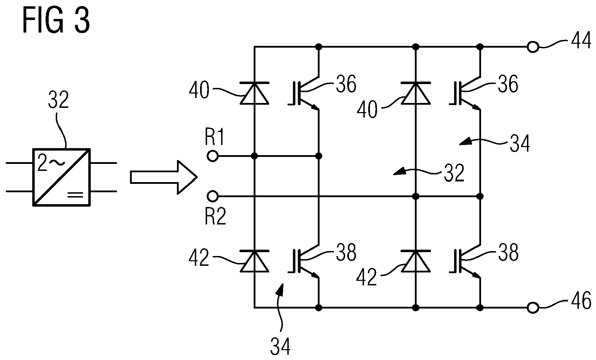

In der Figur 2 ist ebenfalls ein Ersatzschaltbild des dieselelektrischen Antriebssystems näher dargestellt. Dieses dieselelektrische Antriebssystem unterscheidet sich vom dieselelektrischen Antriebssystem gemäß Figur 1 dadurch, dass für die generatorseitigen und lastseitigen selbstgeführten Pulsstromrichter 10, 12 und 14, 16 Realisierungen angegeben sind. Diese selbstgeführten Pulsstromrichter 10, 12, 14 und 16 sind mittels Doppelstromrichter-Brückenzweigmodule 32 realisiert. In der Figur 3 ist ein Ersatzschaltbild dieses Doppelstromrichter-Brückenzweigmoduls 32 näher dargestellt. Mit Hilfe von drei Doppelstromrichter-Brückenzweigmodulen 32 sind die beiden generatorseitigen selbstgeführten Pulsstromrichter 10 und 12 realisiert, wogegen für die Realisierung eines jeden lastseitigen selbstgeführten Pulsstromrichters 14 bzw. 16 drei Doppelstromrichter-Brückenzweigmodule 32 verwendet werden. Somit werden neun Doppelstromrichter-Brückenzweigmodule 32 für die Realisierung des Spannungszwischenkreis-Umrichters 6 des dieselelektrischen Antriebssystems verschaltet.

Gemäß dem Ersatzschaltbild des Doppelstromrichter-Brückenzweigmoduls 32 nach Figur 3 weist dieses Doppelstromrichter-Brückenzweigmodul 32 zwei Brückenzweigmodule 34 auf, die gleichspannungsseitig elektrisch parallel geschaltet sind. Jedes Brückenzweigmodul 34 weist zwei elektrisch in Reihe geschaltete abschaltbare Halbleiterschalter 36 und 38, insbesondere **I**nsulated **G**ate **B**ipolar **T**ransistor (IGBT) auf, die jeweils mit einer korrespondierenden Freilaufdiode 40 bzw. 42 versehen sind. Jeweils ein Verbindungspunkt zweier elektrisch in Reihe geschalteter abschaltbarer Halbleiterschalter 36 und 38 bilden einen wechselspannungsseitigen Anschluss R1 und R2 bzw. S1 und S2 bzw. T1 und T2. Die gleichspannungsseitigen Anschlüsse 44 und 46 eines jeden Doppelstromrichter-Brückenzweigmoduls 32 sind jeweils mit einem Potential des Spannungszwischenkreises 20 des Spannungszwischenkreis-Umrichters 6 elektrisch leitend verbunden.

Bei dieselelektrischen Traktionsantrieben, beispielsweise Diesellokomotiven oder Mining Trucks, dient der an diesem Dieselmotor 2 angebrachte Generator 4 dazu, Energie für die Antriebsmotoren 8 zu liefern. Die elektrische Spannung des Generators 4 wird durch die generatorseitigen selbstgeführten Pulsstromrichter 10 und 12 auf eine vorbestimmte Zwischenkreisspannung gebracht, aus der die lastseitigen selbstgeführten Pulsstromrichter 14 und 16 die Antriebsmotoren 8 versorgt werden. Beim elektrischen Bremsen ist der Leistungsfluss im Spannungszwischenkreis-Umrichter 6 genau umgekehrt. Die Energie wird durch die lastseitigen selbstgeführten Pulsstromrichter 14 und 16 in den Spannungszwischenkreis 20 des Umrichters 6 geliefert. Da der Dieselmotor 2 keine Bremsenergie aufnehmen kann, muss die Bremsenergie mittels der Bremswiderstände 30 in Wärme umgesetzt werden. Für eine kontinuierliche Leistungsverteilung wird eine durch die beiden selbstgeführten Pulsstromrichter 10 und 12 pulsweitenmodulierte Spannung auf die Bremswiderstände 30 gegeben.

Um die Leistungsfähigkeit des Dieselmotors 2, beispielsweise nach einer Reparatur, überprüfen zu können, wird ein so genannter Self-load-Test(stationärer Belastungstest einer Verbrennungskraftmaschine) durchgeführt. Bei Mining Trucks und osteuropäischen und nordamerikanischen Diesellokomotiven ist dieser Self-load-Test bereits Standard. Dieser Self-load-Test wird bei dieselelektrischen Antriebssystemen, die einen elektrisch erregten Synchrongenerator mit nachgeschaltetem Diodengleichrichter aufweisen, bei stehendem Fahrzeug über die Bremswiderstände durchgeführt, die vom Spannungszwischenkreis mittels eines Stromrichters, insbesondere eines Choppers gespeist werden. Da die Leistungsfähigkeit der elektrischen Bremse bei diesen Fahrzeugen im Allgemeinen mindestens der Dieselmotorleistung im Fahren entspricht, ist ein solcher stationärer Belastungstest ohne zusätzliche Einrichtung durchführbar.

Ein gattungsgemäßes dieselelektrisches Antriebssystem lässt einen Self-load-Test bis zur maximalen Dieselmotorleistung ohne leistungsstärkere Halbleiterschalter nicht zu, da ein Self-load-Test:
a) einerseits die gesamte Dieselmotorleistung elektrisch als Stromgrundschwingung in den Spannungszwischenkreis des Spannungszwischenkreis-Umrichters eingespeist werden muss, und
b) simultan diese Leistung in Form von Stromoberschwingungen wieder mittels der Bremswiderstände aus diesem Spannungszwischenkreis heraus in Gegenrichtung übertragen werden muss.

Dies führt zu einer Überlastung der Leistungselektronik des dieselelektrischen Antriebssystems, wenn sich zu bestimmten Schaltzeitpunkten die Stromgrundschwingungsamplitude mit den Stromoberschwingungen überlagert.

Um dennoch bei diesem gattungsgemäßen dieselelektrischen Antriebssystem einen Self-load-Test durchführen zu können, wäre der Einbau eines zusätzlichen Bremschoppers im Spannungszwischenkreis des Spannungszwischenkreis-Umrichters notwendig, wobei dieser Bremschopper für 50% der gesamten Bremsleistung ausgelegt sein müsste. Dieser zusätzliche Bremschopper würde nicht nur zusätzliche Kosten verursachen, sondern auch das Gewicht des Traktionsstromrichters erhöhen. Ferner müsste auf einer dieselelektrischen Lokomotive bzw. einem Mining-Truck ein ausreichender Platz vorhanden sein, der den zusätzlichen Stromrichter aufnehmen könnte.

Der Erfindung liegt nun die Aufgabe zugrunde, das gattungsgemäße dieselelektrische Antriebssystem dahingehend zu verbessern, das zur Durchführung eines Self-load-Tests auf einen zusätzlichen Bremschopper verzichtet werden kann.

Diese Aufgabe wird erfindungsgemäß mit den kennzeichnenden Merkmalen des Anspruchs 1 in Verbindung mit den Merkmalen seines Oberbegriffs gelöst.

Dadurch, dass jeder Bremswiderstand auf zwei elektrische in Reihe geschaltete Widerstände aufgeteilt ist, und wobei jeder Verbindungspunkt zweier elektrisch in Reihe geschalteter Widerstände mit einem Eingang einer zweipoligen Schaltvorrichtung mit Sternpunktbildner verknüpft ist, werden die beiden mehrphasigen Systeme Generator - Ständerwicklung - Pulsstromrichter entkoppelt und jedem System wird ein mehrphasiger Widerstand mit halbem Widerstandswert des Bremswiderstands zugeordnet. Bei diesen entkoppelten dieselelektrischen Antriebssystemen kann nun im Self-load-Test die natürliche Bremskennlinie des Generators, insbesondere des permanenterregten Synchrongenerators, ausgenutzt werden, deren Charakteristik jedoch von der Drehzahl und dem Wert des dreiphasigen Widerstands neben den Maschinenparametern selbst abhängt.

Diese Kennlinien-Charakteristik lässt sich durch eine Blindstromregelung beeinflussen. Einfachster Fall wäre die Parallelschaltung von Kondensatoren zu den Widerständen, wodurch ein kapazitiver Blindstrom bereitgestellt werden könnte. Dies würde jedoch zu einer Erhöhung des Bremsmoments über der Drehzahl führen. Neben weiteren zusätzlichen Bauelementen (Kondensatoren), die für den Fahr- und Bremsbetrieb des Fahrzeugs nicht erforderlich wären, wäre diese Anordnung ungeregelt.

Dieses entkoppelte dieselelektrische Antriebssystem wird erfindungsgemäß mit den Merkmalen des Anspruchs 5 betrieben. Nachdem jeweils die Reihenschaltung zweier Widerstände aufgebrochen und die Widerstände eines jeden Teilsystems elektrisch in Stern geschaltet sind, werden die beiden generatorseitigen selbstgeführten Pulsstromrichter synchron getaktet und jeweils im Phasenschieberbetrieb betrieben. Dadurch werden jeweils ein geregelter Blindstrom aus dem geladenen Spannungszwischenkreis des Spannungszwischenkreis-Umrichters generiert. Über die Regelung des Blindstroms kann ein Bremsmoment in jedem Drehzahlpunkt eingestellt werden und so einer geforderten Momentenkurve des Dieselmotors im Self-load-Test gefolgt werden.

Der erfinderische Schritt liegt in der Verwendung einer einfachen und kostengünstigen zweipoligen Schaltvorrichtung mit Sternpunktbildner in Verbindung mit einer Blindstromregelung mit den vorhandenen generatorseitigen selbstgeführten Pulsstromrichtern. Durch diese erfindungsgemäße Weiterbildung des bekannten dieselelektrischen Antriebssystems kann bei diesem Antriebssystem ein Self-load-Test mit geregeltem Belastungsmoment durchgeführt werden, ohne dass die genannten Nachteile mehr auftreten.

Zur weiteren Erläuterung der Erfindung wird auf die Zeichnung Bezug genommen, in der eine Ausführungsform des erfindungsgemäßen dieselelektrischen Antriebssystems schematisch veranschaulicht ist.
- FIG 1: zeigt ein Ersatzschaltbild eines gattungsgemäßen dieselelektrischen Antriebssystems, in der
- FIG 2: ist ein Ersatzschaltbild einer Realisierung des Antriebssystems nach Figur 1 dargestellt, die
- FIG 3: zeigt ein Ersatzschaltbild eines Doppelstromrichter-Brückenmoduls der selbstgeführten Pulsstromrichter des Antriebssystems nach Figur 2, die
- FIG 4: zeigt ein Ersatzschaltbild mit einer Ausführungsform eines dieselelektrischen Antriebssystems nach der Erfindung, wobei in der
- FIG 5: die Ausführungsform des dieselelektrischen Antriebssystems nach Figur 4 im entkoppelten Zustand dargestellt ist, die
- FIG 6: zeigt in einem Diagramm über der Drehzahl verschiedene charakteristische Bremskennlinien einer permanenterregten Synchronmaschine, und in der
- FIG 7: sind in einem Diagramm über der Zeit Stromkurvenformen bei einer 9-fach-Taktung der generatorseitigen selbstgeführten Pulsstromrichter während eines Self-load-Tests veranschaulicht, wogegen in der
- FIG 8: in einem Diagramm über der Zeit Stromkurvenformen bei einer Blocktaktung der generatorseitigen selbstgeführten Pulsstromrichter während eines Self-load-Tests dargestellt sind.

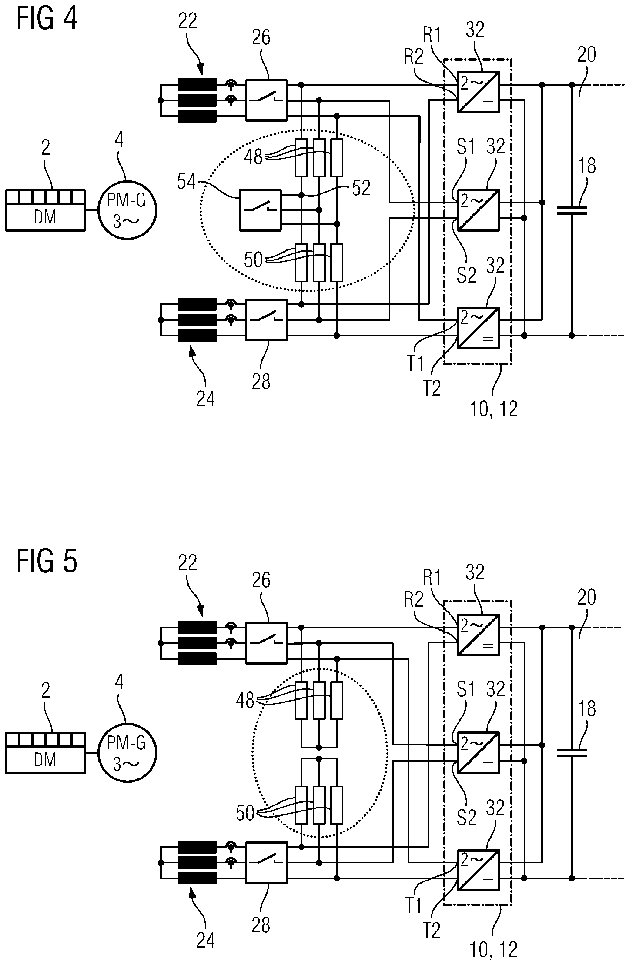

Die Ausführungsform eines erfindungsgemäßen dieselelektrischen Antriebssystems weist nach Figur 4 jeweils als Bremswiderstand 30 zwei elektrisch in Reihe geschaltete Widerstände 48 und 50 auf. Der Widerstandswert jedes Widerstands 48 bzw. 50 ist gleich dem halben Widerstandswert des Bremswiderstands 30 des Antriebssystems gemäß Figur 1. Das heißt, dass der Bremswiderstand 30 auf zwei Widerstandsbauelemente aufgeteilt ist, die elektrisch in Reihe geschaltet sind. Jeder Verbindungspunkt 52 zweier elektrisch in Reihe geschalteter Widerstände 48 und 50 ist mit einem Eingang einer zweipoligen Schaltvorrichtung 54 verknüpft. Mittels dieser zweipoligen Schaltvorrichtung 54 wird jede Reihenschaltung zweier Widerstände 48 und 50 aufgetrennt und zeitgleich werden die Widerstände 48 bzw. 50 elektrisch in Stern geschaltet. Das Ergebnis der Betätigung der zweipoligen Schaltvorrichtung 54 ist in der Figur 5 näher dargestellt. Durch diese erfindungsgemäße Weiterbildung werden die beiden Systeme Generator 4 - Wicklungssystem 22 bzw. 24 - selbstgeführter Pulsstromrichter 10 bzw. 12 entkoppelt und jedem System die Widerstände 48 bzw. 50 zugeordnet.

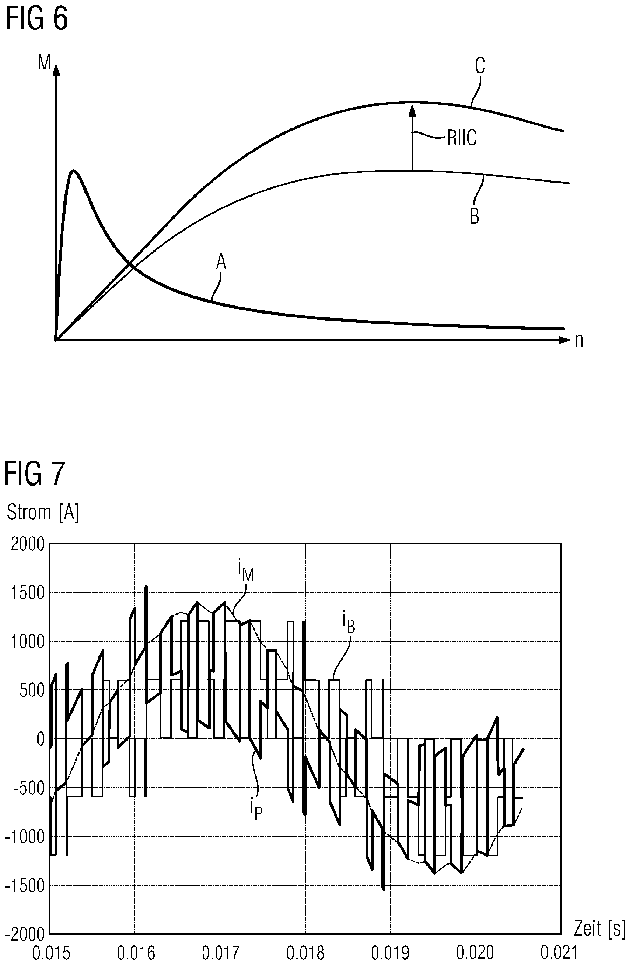

Durch diese nun entstandene Schaltung (Figur 5) kann in einem Self-load-Test die natürliche Bremskennlinie A (generatorisches Moment), dargestellt in der Figur 6, einer permanenterregten Synchronmaschine ausgenutzt werden. Die Charakteristik dieser natürlichen Bremskennlinie A ist aber von der Drehzahl n und dem Wert des Ständerwiderstandes des Generators 4 neben den Maschinenparametern abhängig. Es wäre rein zufällig, wenn diese Bremsmomentenkennlinie A der Momentenkennlinie des Dieselmotors 2 des dieselelektrischen Antriebssystems nach Figur 4 entsprechen würde. In dem Diagramm gemäß Figur 6 ist ebenfalls eine natürliche Bremsmomentenkennlinie B über der Drehzahl n dargestellt, die entsteht, wenn ein Bremswiderstand 48 bzw. 50 verwendet wird. Das heißt, bei der Bremsmomentenkennlinie A ist nur der Ständerwiderstand des permanenterregten Synchronmotors wirksam, wobei bei der Bremsmomentenkennlinie B die Reihenschaltung des Ständerwiderstands des permanenterregten Synchronmotors und des zusätzlichen Widerstands 48 bzw. 50 zum Tragen kommt. Durch den erhöhten Widerstandswert verschiebt sich die Lage des Maximums des generatorischen Moments.

Die Kennlinien-Charakteristik lässt sich, wie bereits erwähnt, durch eine Blindstromregelung beeinflussen. Im einfachsten Fall müssten Kondensatoren zu den Widerständen 48 bzw. 50 elektrisch parallelgeschaltet werden. Durch diese Kondensatoren würde sich das Bremsmoment über der Drehzahl n erhöhen. Eine entsprechende Bremsmomentenkennlinie C ist im Diagramm der Figur 6 über der Drehzahl n aufgetragen. Diese Anordnung wäre aber ungeregelt und bedingt zusätzliche Kondensatoren, die für den Fahr- und Bremsbetrieb des Fahrzeugs nicht erforderlich wären.

Anstatt nicht veränderliche Kondensatoren für eine Blindstromerzeugung zu verwenden, werden erfindungsgemäß die beiden generatorseitigen selbstgeführten Pulsstromrichter 10 und 12 des Spannungszwischenkreis-Umrichters 6 des dieselelektrischen Antriebssystems im Phasenschieberbetrieb genutzt. Durch die Verwendung dieser selbstgeführten Pulsstromrichter 10 und 12 im Phasenschieberbetrieb kann ein bereitgestellter Blindstrom aus dem geladenen Zwischenkreis-Kondensator 18 des Spannungszwischenkreis-Umrichters 6 geregelt werden. Über die Regelung dieses Blindstroms kann ein Bremsmoment in jedem Drehzahlpunkt eingestellt werden und so einer geforderten Momentenkurve des Dieselmotors 2 des dieselelektrischen Antriebssystems im Self-load-Test gefolgt werden.

Im Phasenschieberbetrieb speist der getaktete Pulsstromrichter 10 und 12 infolge von Spannungsoberschwingungen auch die Bremswiderstände 48 und 50 mit Stromoberschwingungen. Diese Wirkleistung, die dem Spannungszwischenkreis 20 des Spannungszwischenkreis-Umrichters 6 dieses dieselelektrischen Antriebssystems entnommen werden muss, ist in der Gesamtbilanz des Antriebssystems zu berücksichtigen, um die in den Bremswiderständen 48 und 50 diszipierte Leistung regeln zu können. Die Stromoberschwingungen sind aber so gering, dass sie nicht zu einer Überlastung der Leistungshalbleiter der beiden selbstgeführten Pulsstromrichter 10 und 12 führen. Während des Self-load-Tests können Hilfsbetriebe aus dem Spannungszwischenkreis 20 mit Energie versorgt werden, damit Lüfter und/oder eine Kühlanlage betrieben werden können.

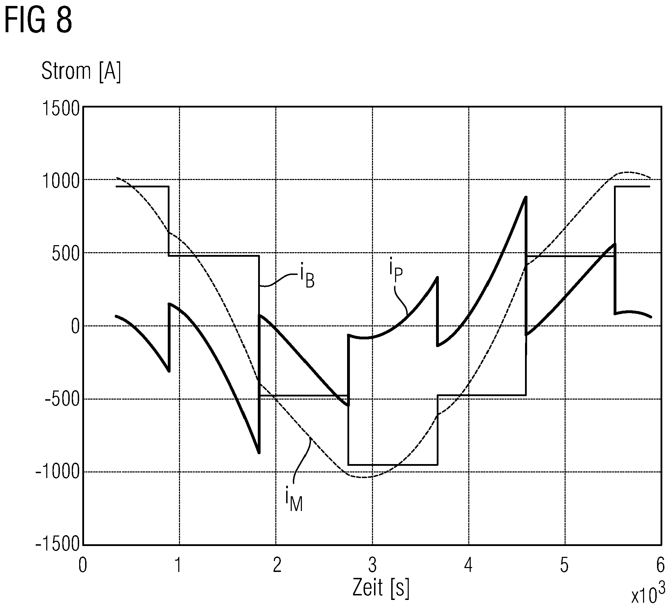

Somit muss die Leistung des permanenterregten Synchrongenerators 4 gleich der Summe aus Verlustleistung der Widerstände 48 und 50 und der Leistung der Hilfsbetriebe sein. Die Verlustleistung der Widerstände 48 und 50 wird nur über den Effektivwert der getakteten Spannung der selbstgeführten Pulsstromrichter 10 und 12 bestimmt. Die Leistung des permanenterregten Synchrongenerators 4 wird über den Winkel der Grundwelle dieser getakteten Spannung zur Polradspannung des permanenterregten Synchrongenerators 4 bestimmt. Im Diagramm gemäß Figur 7 sind über der Zeit ein Bremsstrom i_{B}, ein Maschinenstrom i_{M} und ein Stromrichterstrom i_{P} für eine 9-fach-Taktung während des Self-load-Tests dargestellt. Für eine bessere Übersichtlichkeit ist die Kurvenform des Maschinenstroms i_{M} mittels einer unterbrochenen Linie, die Kurvenform des Stromrichterstroms i_{P} mittels einer fett durchgezogenen Linie, wogegen die Kurvenform des Bremsstroms i_{B} mittels einer durchgezogenen Linie dargestellt sind. In dem Diagramm gemäß der Figur 8 sind über der Zeit der Blindstrom i_{B}, der Maschinenstrom i_{M} und der Stromrichterstrom i_{P} für eine Blocktaktung während des Self-load-Tests dargestellt. Auch in diesem Diagramm sind die Kurvenformen des Maschinen-, Stromrichter- und Bremsstroms i_{M}, i_{P} und i_{B} in den angegebenen Linien dargestellt.

Durch die Verwendung einer einfachen und kostengünstigen Schaltvorrichtung 54 in Verbindung mit der Aufteilung eines jeden Bremswiderstands 30 auf zwei elektrisch in Reihe geschaltete Widerstände 48 und 50 und der Verwendung der vorhandenen generatorseitigen selbstgeführten Pulsstromrichter 10 und 12 des Spannungszwischenkreis-Umrichters 6 eines dieselelektrischen Antriebssystems zur Blindstromregelung wird bei diesem Antriebssystem ein Self-load-Test mit regelbarem Belastungsmoment ermöglicht, wobei die Leistungshalbleiter der beiden selbstgeführten Pulsstromrichter 10 und 12 des Spannungszwischenkreis-Umrichters 6 dieses Antriebssystems nicht überlastet werden.

## Patentansprüche

1. Dieselelektrisches Antriebssystem mit einem Generator (4), der läuferseitig mit einem Dieselmotor (2) mechanisch gekoppelt ist und ständerseitig mit einem Spannungszwischenkreis-Umrichter (6) elektrisch leitend verbunden ist, wobei der Generator (4) zwei mehrphasige Wicklungssysteme (22, 24) aufweist, die jeweils mit wechselspannungsseitigen Anschlüssen (R1, S1, T1; R2, S2, T2) eines selbstgeführten Pulsstromrichters (10, 12) des Spannungszwischenkreis-Umrichters (6) elektrisch leitend verbunden sind, wobei diese beiden selbstgeführten Pulsstromrichter (10, 12) gleichspannungsseitig elektrisch parallel zu einem Zwischenkreis-Kondensator (18) des Spannungszwischenkreis-Umrichters (6) geschaltet sind, und wobei jeder wechselspannungsseitige Anschluss (R1, S1, T1) des einen selbstgeführten Pulsstromrichters (10) mittels eines Bremswiderstands (30) mit einem korrespondierenden wechselspannungsseitigen Anschluss (R2, S2, T2) des anderen Pulsstromrichters (12) elektrisch leitend verbunden sind,
**dadurch gekennzeichnet, dass** jeweils als Bremswiderstand (30) zwei elektrisch in Reihe geschaltete Widerstände (48, 50) vorgesehen sind, deren Widerstandswerte gleich dem halben Widerstandswert des Bremswiderstands (30) sind, und dass ein Verbindungspunkt (52) jeweils zweier in Reihe geschalteter Widerstände (48, 50) mit einem Eingang einer zweipoligen Schaltvorrichtung (54) mit Sternpunktbildnern verknüpft ist.

2. Dieselelektrisches Antriebssystem nach Anspruch 1,
**dadurch gekennzeichnet, dass** als Generator (4) ein permanenterregter Synchrongenerator vorgesehen ist.

3. Dieselelektrisches Antriebssystem nach Anspruch 1,
**dadurch gekennzeichnet, dass** als Generator (4) ein Asynchrongenerator vorgesehen ist.

4. Dieselelektrisches Antriebssystem nach Anspruch 1,
**dadurch gekennzeichnet, dass** als Zwischenkreis-Kondensator (18) eine Kondensatorbatterie vorgesehen ist.

5. Dieselelektrisches Antriebssystem nach einem der vorgenannten Ansprüche,
**dadurch gekennzeichnet, dass** jedes mehrphasige Wicklungssystem (22, 24) des Generators (4) mittels eines Leistungsschalters (26, 28) mit wechselspannungsseitigen Anschlüssen (R1, S1, T1; R2, S2, T2) eines selbstgeführten Pulsstromrichters (10, 12) verknüpft ist.

6. Verfahren zum stationären Belastungstest eines Dieselmotors (2) eines dieselelektrischen Antriebssystems nach Anspruch 1 mit folgenden Verfahrensschritten:
a) Betätigung der zweipoligen Schaltvorrichtung (54),
b) synchrones Takten der beiden selbstgeführten Pulsstromrichter (10, 12) und
c) Regelung der beiden selbstgeführten Pulsstromrichter (10, 12) derart, dass ein vorbestimmter Blindstrom aus den Pulsstromrichtern (10, 12) fließt.

## Claims

1. Diesel-electric drive system having a generator (4) which is mechanically coupled on the rotor side to a diesel engine (2) and is electrically conductively connected on the stator side to a voltage intermediate-circuit converter (6), wherein the generator (4) has two polyphase winding systems (22, 24) which are each electrically conductively connected to connections (R1, S1, T1; R2, S2, T2) on the AC voltage side of a self-commutated pulse-controlled converter (10, 12) in the voltage intermediate-circuit converter (6), wherein these two self-commutated pulse-controlled converters (10, 12) are connected electrically in parallel on the DC voltage side with an intermediate-circuit capacitor (18) in the voltage intermediate-circuit converter (6), and wherein each connection (R1, S1, T1) on the AC voltage side of the self-commutated pulse-controlled converter (10) is electrically conductively connected by means of a braking resistor (30) to a corresponding connection (R2, S2, T2) on the AC voltage side of the other pulse-controlled converter (12),
**characterized in that** two resistors (48, 50) are provided as the braking resistor (30), which are electrically connected in series and whose resistance values are equal to half the resistance value of the braking resistor (30), and **in that** a connection point (52) between in each case two series-connected resistors (48, 50) is linked to one input of a two-pole switching apparatus (54) with star-point formers.

2. Diesel-electric drive system according to Claim 1,
**characterized in that** a permanent-magnet synchronous generator is provided as the generator (4).

3. Diesel-electric drive system according to Claim 1,
**characterized in that** an asynchronous generator is provided as the generator (4).

4. Diesel-electric drive system according to Claim 1,
**characterized in that** a capacitor bank is provided as the intermediate-circuit capacitor (18).

5. Diesel-electric drive system according to one of the preceding claims,
**characterized in that** each polyphase winding system (22, 24) of the generator (4) is linked by means of a circuit breaker (26, 28) to connections (R1, S1, T1; R2, S2, T2) on the AC voltage side of one self-commutated pulse-controlled converter (10, 12).

6. Method for stationary load testing of a diesel engine (2) of a diesel-electric drive system according to Claim 1 having the following method steps:
a) Operation of the two-pole switching apparatus (54),
b) Synchronous clocking of the two self-commutated pulse-controlled converters (10, 12), and
c) Closed-loop control of the two self-commutated pulse-controlled converters (10, 12) such that a predetermined reactive current flows out of the pulse-controlled converters (10, 12).

## Revendications

1. Système d'entraînement diesel électrique, comprenant un alternateur (4), qui, du côté du rotor, est couplé mécaniquement à un moteur (2) diesel et, du côté du stator, est relié d'une manière conductrice de l'électricité à un convertisseur (6) de circuit intermédiaire de tension, l'alternateur (4) ayant deux systèmes (22, 24) d'enroulement polyphasés, qui sont reliés d'une manière conductrice de l'électricité chacun à des bornes (R1, S1, T1; R2, S2, T2) du côté de la tension alternative d'un redresseur (10, 12) à impulsions à autocommutation du convertisseur (6) de circuit intermédiaire de tension, ces deux redresseurs (10, 12) à commutation automatique étant montés en parallèle électriquement du côté de la tension continue, à un condensateur (18) de circuit intermédiaire du convertisseur (6) de circuit intermédiaire de tension et chaque borne (R1, S1, T1) du côté de la tension alternative de l'un des redresseurs (10) à impulsions à autocommutation étant reliée de manière conductrice de l'électricité, au moyen d'une résistance (30) de frein, à une borne (R2, S2, T2) correspondante du côté de la tension alternative de l'autre redresseur (12) à impulsions,
**caractérisé en ce qu'**il est prévu respectivement, comme résistance (30) de frein, deux résistances (48, 50) montées électriquement en série, dont les valeurs sont égales à la moitié de la valeur de la résistance (30) de frein et **en ce qu'**un point (52) de liaison de respectivement deux résistances (48, 50) montées en série est relié à une entrée d'un dispositif (54) de commutation bipolaire à formations du neutre.

2. Système d'entraînement diesel électrique suivant la revendication 1,
**caractérisé en ce qu'**il est prévu un alternateur synchrone à excitation permanente comme alternateur (4).

3. Système d'entraînement diesel électrique suivant la revendication 1,
**caractérisé en ce qu'**il est prévu un alternateur asynchrone comme alternateur (4).

4. Système d'entraînement diesel électrique suivant la revendication 1,
**caractérisé en ce qu'**il est prévu une batterie de condensateur comme condensateur (18) de circuit intermédiaire.

5. Système d'entraînement diesel électrique suivant l'une des revendications précédentes,
**caractérisé en ce que** chaque système (22, 24) d'enroulement polyphasé de l'alternateur (4) est relié, au moyen d'un interrupteur (26, 28) de puissance, à des bornes (R1, S1, T1; R2, S2, T2) du côté de la tension alternative d'un redresseur (10, 12) à impulsions à commutation automatique.

6. Procédé de tests de chargement fixe d'un moteur (2) diesel d'un système d'entraînement diesel électrique suivant la revendication 1, comprenant les stades de procédé suivants
a) actionnement du dispositif (54) de commutation bipolaire,
b) cadencement synchrone des deux redresseurs (10, 12) à impulsions à autocommutation et
c) régulation des deux redresseurs (10, 12) à impulsions à autocommutation, de manière à faire sortir un courant réactif défini à l'avance des redresseurs (10, 12) à impulsions.
